# DEMANDE DE BREVET EUROPEEN

(11) **EP 4 848 730 A2**
(43) Date de publication de la demande: **02.12.2026**
(21) Numéro de dépôt: 26212681.6
(22) Date de dépôt: 08.09.2021
(51) Int. Cl.: H04N 19/597

(54) **CODAGE ET DECODAGE D'UNE VIDEO MULTI-VUES**

(30) Priorité: 29.09.2020 FR 2009913
(62) Numéro(s) de document de la (des) demande(s) initiale(s) en application de l'article 76 CBE: 21782786.4 / 4 222 950
(71) Demandeur: Orange, 92130 Issy-les-Moulineaux (FR)
(72) Inventeur: HENRY, Félix, 92326 Chatillon (FR); GARUS, Patrick, 92326 Chatillon (FR); CLARE, Gordon, 92326 Chatillon (FR)

(57) **Abrégé**

L'invention concerne un procédé de décodage d'une composante de profondeur d'au moins une vue, comprenant :
- la lecture, dans un signal de données, d'une information indiquant si un bloc courant de la composante de profondeur est subdivisé en blocs de plus petite taille,
- pour au moins un bloc d'une partition en blocs obtenue à partir de ladite information, le décodage d'un paramètre d'estimation de profondeur associé audit bloc.

## Description

### Domaine de l'invention

La présente invention se rapporte de manière générale au domaine des vidéos immersives, telles que notamment les vidéos multi-vues. Plus particulièrement, l'invention concerne le codage et le décodage de vues multiples qui sont capturées pour générer de telles vidéos immersives, ainsi que la synthèse de points de vue intermédiaires non capturés.

L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc.), et au décodage vidéo correspondant.

### Art antérieur

Pour générer une vidéo omnidirectionnelle, telle que par exemple une vidéo 360°, il est courant d'utiliser une caméra 360°. Une telle caméra 360° se compose de plusieurs caméras 2D (deux dimensions) installées sur une plateforme sphérique.

Chaque caméra 2D capte un angle particulier d'une scène 3D (trois dimensions), vue depuis le même point de vue, l'ensemble des vues capturées par les caméras permettant de générer une vidéo représentant la scène 3D selon un champ de vision à 360°x180°, depuis un point de vue. Il est aussi possible d'utiliser une seule caméra 360° pour capturer la scène 3D selon un champ de vision 360°x180°. Un tel champ de vision peut bien sûr être moins grand, par exemple à 270°x135°.

De telles vidéos 360° permettent alors à l'utilisateur de regarder la scène comme s'il était placé au centre de celle-ci et de regarder tout autour de lui, à 360°, fournissant ainsi une nouvelle manière de regarder des vidéos. De telles vidéos sont en général restituées sur des casques de réalité virtuelle, aussi connus sous le nom anglais HMD pour « Head Mounted Devices ». Mais elles peuvent également être affichées sur des écrans 2D équipés de moyens d'interaction utilisateur adaptés. Le nombre de caméras 2D pour capturer une scène à 360° varie en fonction des plateformes utilisées.

Toutefois, l'approche 360⁰ précitée est limitée puisque le spectateur ne peut regarder la scène que depuis un unique point de vue.

Afin de permettre au spectateur de changer de point de vue, il existe des systèmes de capture multi-vues, dans lesquels la scène 3D est capturée par un ensemble de caméras de type 2D, chaque caméra capturant un angle particulier de la scène. Afin d'améliorer la sensation d'immersion dans la scène, une ou plusieurs vues manquantes, c'est-à-dire représentatives de points de vue non capturés par les caméras, sont synthétisées à partir des vues existantes.

Le calcul de ces vues manquantes ou intermédiaires est réalisé par un algorithme dit « de synthèse » de vue. Par exemple, le logiciel VSRS (pour « View Synthesis Reference » en anglais) peut être utilisé comme algorithme de synthèse de vue.

Classiquement, un tel algorithme de synthèse se base à la fois sur les composantes de texture des vues capturées à différents instants par chaque caméra, mais aussi sur des composantes de profondeur de ces vues, dites « cartes de profondeur ». Une carte de profondeur représente la distance de chaque pixel d'une vue par rapport à la caméra qui a capturé cette vue. Ainsi, chaque caméra, depuis son point de vue respectif, capture une vue de la scène 3D sous la forme d'une composante de texture à laquelle est associée une carte de profondeur de la scène 3D vue depuis le point de vue respectif de la caméra. Il y a plusieurs moyens de construire une carte de profondeur : radar, laser, méthode calculatoire à l'aide des pixels de la vue courante et des vues voisines.

Il existe des techniques connues d'estimation de profondeur à partir d'un ensemble de composantes de texture. Ainsi, la méthode DERS décrite dans le document « O. Stankiewicz, K. Wegner, M. Tanimoto and M. Domański, "Enhanced Depth Estimation Reference Software (DERS) for Free-viewpoint Television", ISO/IEC JTC1/SC29/WG11 Doc. MPEG M31518, Geneva, 2013 » utilise au moins deux composantes de texture pour estimer dans un premier temps la disparité entre deux vues, c'est-à-dire le déplacement d'un pixel entre les deux vues, mesuré en nombre de pixels. Pour ce faire, pour un bloc entourant un pixel courant dans une vue courante, DERS applique successivement des étapes de mise en correspondance de blocs (« block-matching » en anglais), de façon à identifier, dans une autre vue, le bloc qui minimise l'erreur par rapport au bloc de la vue courante. Cette recherche est effectuée horizontalement puisque les vues sont considérées comme calibrées. La recherche est effectuée dans un intervalle de disparité prédéterminé, c'est-à-dire que la mise en correspondance de bloc va se faire pour tous les blocs compris entre une disparité minimum Dₘᵢₙ et une disparité maximum Dₘₐₓ. Il y a un lien direct entre disparité « d » et profondeur « Z » de la scène, la profondeur « Z » d'un pixel de disparité « d » étant égal à :$Z = \left(b ∗f\right) / d ,$ où « b » est la distance entre les centres optiques des caméras ayant saisi les vues, et « f » la focale des caméras. Ainsi, la disparité minimum Dₘᵢₙ correspond à une profondeur maximale Zₘₐₓ attendue dans la scène, et la disparité maximale Dₘₐₓ correspond à une profondeur minimum Zₘᵢₙ attendue dans la scène. Dans un cas concret, la capture de la scène se fait en spécifiant une valeur prédéterminée de Zₘᵢₙ, par exemple 0.3m, et de Zₘₐₓ, par exemple 5m. Ceci produit directement les valeurs Dₘᵢₙ et Dₘₐₓ qui détermineront le nombre d'hypothèses de disparités à évaluer. Par exemple, dans le cas où il est déterminé que Dₘᵢₙ=2 pixels et Dₘₐₓ=192 pixels, ceci signifie que la technique de mise en correspondance de blocs évalue des coûts de correspondance de bloc pour toutes les hypothèses de disparité D=2,3,4,...,191,192 pixels, soit 191 calculs à stocker et à comparer entre eux. L'algorithme DERS détermine ainsi quelle disparité choisir parmi les 191 possibles, en fonction du coût associé à chaque disparité, ainsi que d'un ou de plusieurs paramètres de régularisation, dont le paramètre Sc (pour « Smoothing Coefficient » en anglais). Ce coefficient détermine la régularité de la carte de profondeur produite. Ainsi, si ce coefficient est faible, la carte de profondeur sera plus précise mais risque de comporter du bruit, tandis que si ce coefficient est élevé, la carte de profondeur sera très régulière, avec des zones homogènes de profondeur, mais risque de mal représenter les petites variations locales.

Il existe d'autres méthodes d'estimation de profondeur, comme par exemple la méthode IVDE (pour « Immersive Video Depth Estimation » en anglais), présentée dans le document « Dawid Mieloch, Adrian Dziembowski, Jakub Stankowski, Olgierd Stankiewicz, Marek Domański, Gwangsoon Lee, Yun Young Jeong [MPEG-I Visual] Immersive video depth estimation, ISO/IEC JTC1/SC29/WG11 MPEG2020 m53407 », qui détermine conjointement le carte de profondeur d'une série de vues en parallèle.

Dans un codeur vidéo immersif classique, les composantes de texture et leurs cartes de profondeur respectives sont codées et envoyées à un décodeur qui est installé par exemple dans un dispositif d'affichage d'un utilisateur. Côté décodeur, chaque vue est décodée, le décodage d'une vue comprenant le décodage de la composante de texture de cette vue, ainsi que le décodage de la carte de profondeur associée à la composante de texture de cette vue. Un algorithme de synthèse construit alors une vue intermédiaire correspondant à un point de vue demandé par l'utilisateur, à partir d'une ou plusieurs cartes de profondeur décodées et d'une ou plusieurs composantes de textures décodées.

Le document "Patrick Garus, Jung Joel, Thomas Maugey, Christine Guillemot. Bypassing Depth Maps Transmission For Immersive Video Coding. PCS 2019 - Picture Coding Symposium, Nov 2019, Ningbo, China.pp.1-5. hal-02397800 " décrit un codeur vidéo immersif dans lequel les cartes de profondeurs ne sont pas codées. Seules les composantes de texture des vues sont codées et transmises au décodeur. Côté décodeur, les composantes de texture sont décodées, puis un procédé d'estimation de profondeur, tel que par exemple DERS, est appliqué aux composantes de texture décodées pour générer des cartes de profondeur estimées. Un algorithme de synthèse VSRS (pour « View Synthesis Reference Software » en anglais) utilise alors ces cartes de profondeur estimées pour effectuer la synthèse de vues.

Grâce à cette technique, le débit de codage d'une vidéo omnidirectionnelle est réduit puisqu'il n'est pas nécessaire de coder et transmettre les cartes de profondeur. En outre, le nombre de pixels à décoder pour obtenir une vue synthétisée est plus faible que celui utilisé dans un décodeur vidéo immersif classique.

Toutefois, le procédé de décodage utilisé dans cette technique est lourd en calculs puisqu'il nécessite la mise en œuvre d'une étape d'estimation de profondeur dans le décodeur. En outre, les profondeurs estimées au décodeur étant basées sur des composantes de texture décodées qui sont de moindre qualité en comparaison avec les composantes de texture originales, les profondeurs estimées sont elles-mêmes de moins bonne qualité. Il en résulte que la synthèse de vues mise en œuvre dans cette technique n'est donc pas optimale, ni en terme de qualité d'images restituées à l'utilisateur, ni en terme de consommation des ressources calculatoires.

### Objet et résumé de l'invention

Un des buts de l'invention est de remédier à des inconvénients de l'état de la technique précité.

A cet effet, un objet de la présente invention concerne un procédé de codage de vues représentant simultanément une scène 3D selon différentes positions ou différents angles de vue, mis en œuvre par un dispositif de codage, comprenant ce qui suit, pour une composante de profondeur d'au moins une vue :
- partitionner ladite composante de profondeur en au moins un bloc,
- obtenir une information de profondeur dudit au moins un bloc à partir de données de texture d'une composante de texture d'au moins une desdites vues,
- obtenir au moins un paramètre d'estimation de profondeur à partir de l'information de profondeur,
- coder ledit au moins un paramètre d'estimation de profondeur, l'information de profondeur dudit au moins un bloc n'étant pas codée.

Un tel procédé de codage selon l'invention permet, lors du codage d'une vue, d'éviter de coder les blocs de profondeur de la composante ou carte de profondeur associée à cette vue, ce qui allège les calculs mis en œuvre par le codeur, tout en économisant les ressources mémoire qui n'ont plus à stocker les données codées des blocs de profondeur. Du fait que ce bloc de profondeur n'est pas codé, aucune donnée codée relative à ce bloc de profondeur n'est transmise à un décodeur, ce qui réduit le coût de signalisation des informations transmises entre le codeur et le décodeur. Pour compenser l'absence de données codées relatives au bloc de profondeur et permettre un décodage du bloc de profondeur, le procédé de codage selon l'invention met en œuvre le codage d'au moins un paramètre d'estimation de profondeur associé au bloc de profondeur, lequel paramètre d'estimation de profondeur sera utilisé au décodeur pour reconstruire le bloc de profondeur sans avoir à décoder préalablement ce bloc de profondeur.

Selon un mode de réalisation particulier, ledit au moins un paramètre d'estimation de profondeur est soit une valeur de profondeur dudit au moins un bloc qui est supérieure à chacune des valeurs de profondeur dudit au moins un bloc, soit une valeur de profondeur dudit au moins un bloc qui est inférieure à chacune des valeurs de profondeur dudit au moins un bloc.

Selon ce mode particulier de réalisation, l'estimateur de profondeur du décodeur n'a plus besoin, pour reconstruire un bloc de profondeur, d'évaluer la vraisemblance de chaque profondeur correspondante possible pour ce bloc avec chaque pixel d'un bloc de texture reconstruit d'une ou de plusieurs vues. En effet, selon ce mode de réalisation, l'estimateur de profondeur se contente, pour un bloc de profondeur à reconstruire, d'estimer la profondeur de ce bloc uniquement dans un intervalle compris entre la valeur de profondeur minimale et la valeur de profondeur maximale de ce bloc. Une telle estimation de profondeur accélère considérablement l'étape d'estimation de profondeur qui est un aspect complexe de l'état de l'art.

Selon un autre mode de réalisation particulier, ledit au moins un paramètre d'estimation de profondeur est un paramètre utilisé par une méthode d'estimation de profondeur.

Selon ce mode particulier de réalisation, le/les paramètres d'estimation de profondeur utilisés par les méthodes connues d'estimation de profondeur sont avantageusement optimisés, de façon à produire le bloc de profondeur estimé le plus proche possible du bloc de profondeur original. De tels paramètres sont par exemple des paramètres de régularisation permettant de forcer l'algorithme d'estimation de profondeur à trouver une carte de profondeur peu bruitée ou bien des paramètres de fiabilité permettant à l'algorithme d'estimation de profondeur de continuer à raffiner une valeur de profondeur si sa fiabilité est trop faible.

Selon un autre mode de réalisation particulier, est codée une information représentative d'une méthode d'estimation de profondeur.

Selon ce mode particulier de réalisation, le codeur est capable de tester différentes méthodes d'estimation de profondeur disponibles, chacune étant susceptible de donner des résultats plus ou moins bons sur un contenu ou bloc donné, de sélectionner la méthode d'estimation de profondeur qui produit la meilleur estimation de profondeur sur le bloc courant, et de coder cette sélection en vue de la transmettre à un décodeur pour appliquer l'estimation de profondeur sélectionnée sur le bloc courant.

Les différents modes ou caractéristiques de réalisation précités peuvent être ajoutés indépendamment ou en combinaison les uns avec les autres au procédé de codage défini ci-dessus.

L'invention concerne également un dispositif de codage de vues représentant simultanément une scène 3D selon différentes positions ou différents angles de vue, ledit dispositif de codage comprenant un processeur qui est configuré pour mettre en œuvre ce qui suit, pour une composante de profondeur d'au moins une vue :
- partitionner la composante de profondeur en au moins un bloc,
- obtenir une information de profondeur dudit au moins un bloc à partir de données de texture d'une composante de texture d'au moins une desdites vues,
- obtenir au moins un paramètre d'estimation de profondeur à partir de l'information de profondeur,
- coder ledit au moins un paramètre d'estimation de profondeur, l'information de profondeur dudit au moins un bloc n'étant pas codée.

Un tel dispositif de codage est notamment apte à mettre en œuvre le procédé de codage précité.

L'invention concerne également un procédé de décodage de vues représentant simultanément une scène 3D selon différentes positions ou différents angles de vue, mis en œuvre par un dispositif de décodage, comprenant ce qui suit, pour une composante de profondeur d'au moins une vue, la composante de profondeur étant partitionnée en au moins un bloc :
- lire dans un signal de données au moins un paramètre d'estimation de profondeur associé audit au moins un bloc,
- décoder ledit au moins un paramètre d'estimation de profondeur,
- obtenir une information de profondeur dudit au moins un bloc à partir dudit au moins un paramètre d'estimation de profondeur et à partir de données de texture d'une composante de texture reconstruite d'au moins une desdites vues.

Un tel procédé de décodage selon l'invention a une faible complexité calculatoire et permet avantageusement d'économiser des ressources mémoire. En effet, l'information de profondeur du bloc n'ayant pas été codée, et donc transmise au décodeur, ce dernier n'a pas besoin de la décoder et de la stocker. Au décodage, il est seulement utile de décoder au moins un paramètre d'estimation de profondeur transmis dans un signal de données reçu par le décodeur pour reconstruire l'information de profondeur du bloc, ledit au moins paramètre d'estimation de profondeur étant moins coûteux à transmettre que l'information de profondeur.

Selon un mode de réalisation particulier, ledit au moins un paramètre d'estimation de profondeur est soit une valeur de profondeur dudit au moins un bloc qui est supérieure à chacune des valeurs de profondeur dudit au moins un bloc, soit une valeur de profondeur dudit au moins un bloc qui est inférieure à chacune des valeurs de profondeur dudit au moins un bloc.

Selon un autre mode de réalisation particulier, ledit au moins un paramètre d'estimation de profondeur est un paramètre utilisé par une méthode d'estimation de profondeur.

Selon un autre mode de réalisation particulier, est décodée une information représentative d'une méthode d'estimation de profondeur.

Les différents modes ou caractéristiques de réalisation précités peuvent être ajoutés indépendamment ou en combinaison les uns avec les autres au procédé de décodage défini ci-dessus.

L'invention concerne également un dispositif de décodage de vues représentant simultanément une scène 3D selon différentes positions ou différents angles de vue, ledit dispositif de décodage comprenant un processeur qui est configuré pour mettre en œuvre ce qui suit, pour une composante de profondeur d'au moins une vue, la composante de profondeur étant partitionnée en au moins un bloc :
- lire dans un signal de données au moins un paramètre d'estimation de profondeur associé audit au moins un bloc,
- décoder ledit au moins un paramètre d'estimation de profondeur,
- obtenir une information de profondeur dudit au moins un bloc à partir dudit au moins un paramètre d'estimation de profondeur et à partir de données de texture d'une composante de texture reconstruite d'au moins une desdites vues.

Un tel dispositif de décodage est notamment apte à mettre en œuvre le procédé de décodage précité.

L'invention concerne également un procédé de synthèse de vue, ledit procédé de synthèse étant mis en œuvre par un dispositif de décodage ou de synthèse de vue, comprenant ce qui suit :
- reconstruire une vue conformément au procédé de décodage selon l'invention précité,
- synthétiser au moins une partie d'une vue à partir de la vue reconstruite et de l'information représentative de la profondeur dudit au moins un bloc qui a été obtenue. L'invention concerne encore un programme d'ordinateur comportant des instructions pour la mise en œuvre du procédé de codage, de décodage ou de synthèse selon l'invention, selon l'un quelconque des modes particuliers de réalisation décrits précédemment, lorsque ledit programme est exécuté par un processeur.

De telles instructions peuvent être stockées durablement dans un support mémoire non transitoire du dispositif de codage mettant en œuvre le procédé de codage précité, du dispositif de décodage mettant en œuvre le procédé de décodage précité ou du dispositif de synthèse mettant en œuvre le procédé de synthèse précité.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage précité, du procédé de décodage précité ou encore du procédé de synthèse précité.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] la figure 1 représente le déroulement d'un procédé de codage d'une vue, dans un mode de réalisation particulier de l'invention,
[Fig. 2A] la figure 2A représente un premier mode de réalisation d'une étape d'obtention d'un paramètre d'estimation de profondeur, mis en œuvre dans le procédé de codage de la figure 1,
[Fig. 2B] la figure 2B représente un deuxième mode de réalisation d'une étape d'obtention d'un paramètre d'estimation de profondeur, mis en œuvre dans le procédé de codage de la figure 1,
[Fig. 3A] la figure 3A représente un premier mode de réalisation de signalisation des informations codées par le procédé de codage de la figure 1,
[Fig. 3B] la figure 3B représente un deuxième mode de réalisation de signalisation des informations codées par le procédé de codage de la figure 1,
[Fig. 4] la figure 4 représente un dispositif de codage vidéo mettant en œuvre le procédé de codage de la figure 1,
[Fig. 5] la figure 5 représente le déroulement d'un procédé de décodage d'une vue, dans un mode de réalisation particulier de l'invention,
[Fig. 6] la figure 6 représente un dispositif de décodage vidéo mettant en œuvre le procédé de décodage de la figure 5,
[Fig. 7] la figure 7 représente le déroulement d'un procédé de synthèse de vue manquante, dans un mode de réalisation particulier de l'invention,
[Fig. 8A] la figure 8A représente un dispositif de synthèse mettant en œuvre le procédé de synthèse de la figure 7, dans un mode de réalisation particulier de l'invention,
[Fig. 8B] la figure 8B représente un dispositif de synthèse mettant en œuvre le procédé de synthèse de la figure 7, dans un autre mode de réalisation particulier de l'invention.

### Description détaillée d'un mode de réalisation de l'invention

### Exemples de mise en œuvre d'un procédé de codage de vidéos multi-vues

On décrit ci-après un procédé de codage de vidéos multi-vues qui peut utiliser tout type de codeurs vidéo multi-vues, par exemple conformes au standard 3D-HEVC ou MV-HEVC, ou autre.

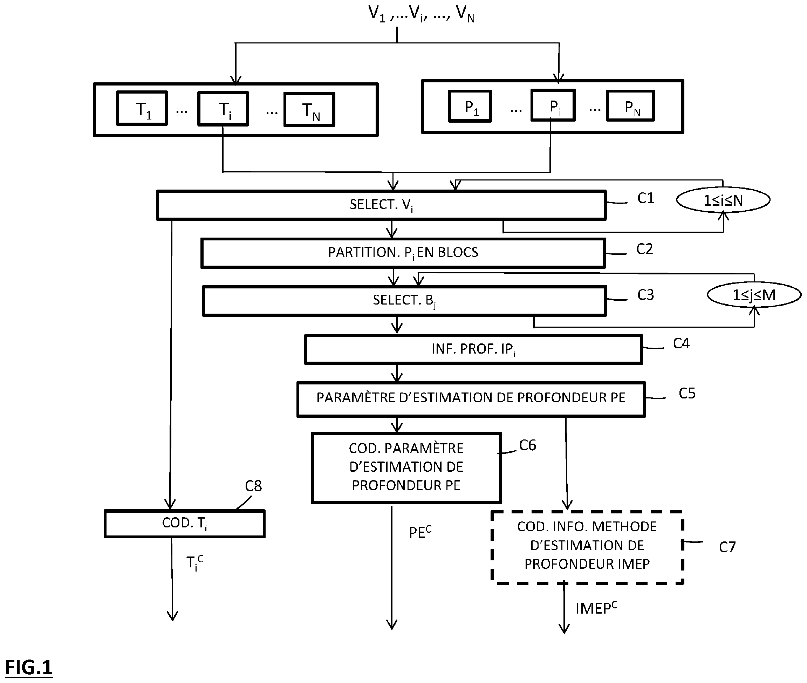

En référence à la figure 1, un tel procédé de codage s'applique à une vue courante qui fait partie d'une pluralité de vues V₁,..., V_{N}, la pluralité de vues représentant une scène 3D selon respectivement une pluralité d'angles de vue ou une pluralité de positions/orientations des caméras capturant la scène.

Le procédé de codage selon l'invention consiste à coder à un instant courant :
- une vue V₁,
- une vue V₂,
- ...,
- une vue Vᵢ,
- ...,
- une vue V_{N}.

Une vue considérée parmi N peut être aussi bien une composante de texture qu'une composante ou carte de profondeur associée à cette vue. Par exemple, une vue courante Vᵢ (1≤i≤N) est associée classiquement à une composante de texture Tᵢ de Q (Q≥1) pixels et à une composante de profondeur Pᵢ ayant Q valeurs de profondeur associées à Q pixels d'au moins une composante de texture, telle que par exemple la composante de texture Tᵢ ou d'une composante de texture d'une autre vue parmi N, que la vue Vᵢ. De façon connue, la composante de profondeur Pᵢ peut être générée directement à partir de l'image de texture Tᵢ ou encore par capture de données volumétriques de la scène 3D à l'aide de dispositifs tels que par exemple LIDAR (pour « light detection and ranging » en anglais).

En C1, une vue courante Vᵢ est sélectionnée à l'instant courant, chacune des N vues étant sélectionnée l'une après l'autre dans un ordre prédéterminé.

En C2, la composante de profondeur Pᵢ de ladite au moins une vue Vᵢ est partitionnée en une pluralité de blocs B₁, B₂,..., Bⱼ,..., B_{M} (1≤j≤M). Dans un mode de réalisation possible, on considère qu'un seul bloc de profondeur correspond à une composante de profondeur Pᵢ non partitionnée. Les blocs de la composante de profondeur peuvent être de taille prédéfinie (par exemple 64x64 pixels), paramétrable (et alors la taille utilisée est transmise sous forme codée), ou encore adaptative, avec une signalisation des tailles utilisées similaire à celle mise en oeuvre dans le standard HEVC. Dans ce dernier cas, la composante de profondeur Pᵢ est d'abord divisée en blocs de taille maximale (par exemple 64x64 pixels), puis une information binaire est transmise pour chaque bloc indiquant si le bloc doit être subdivisé en blocs plus petits, de façon récursive, jusqu'à atteindre la taille minimale de bloc prédéfinie (par exemple 4x4 pixels), pour laquelle aucune information n'est transmise. Ceci permet de définir la découpe en blocs de la composante de profondeur Pᵢ.

En C3, un bloc courant Bⱼ de la composante de profondeur Pᵢ est sélectionné, chacun des blocs de la composante de profondeur Pᵢ étant sélectionné l'un après l'autre dans un ordre prédéterminé.

En C4, pour ledit au moins un bloc courant Bⱼ, une information de profondeur IPⱼ est obtenue. De façon connue en soi, pour tout ou partie des pixels d'un bloc de pixels BT de la composante de texture Tᵢ et/ou d'une composante de texture d'une autre vue parmi N que la vue Vᵢ, des valeurs de profondeur Z₁ à Z_{R} correspondant à ces pixels sont obtenues, formant un bloc de profondeur BPⱼ correspondant au bloc de pixels BT. En C5, est obtenu au moins un paramètre d'estimation de profondeur PE à partir de ladite information de profondeur IPᵢ.

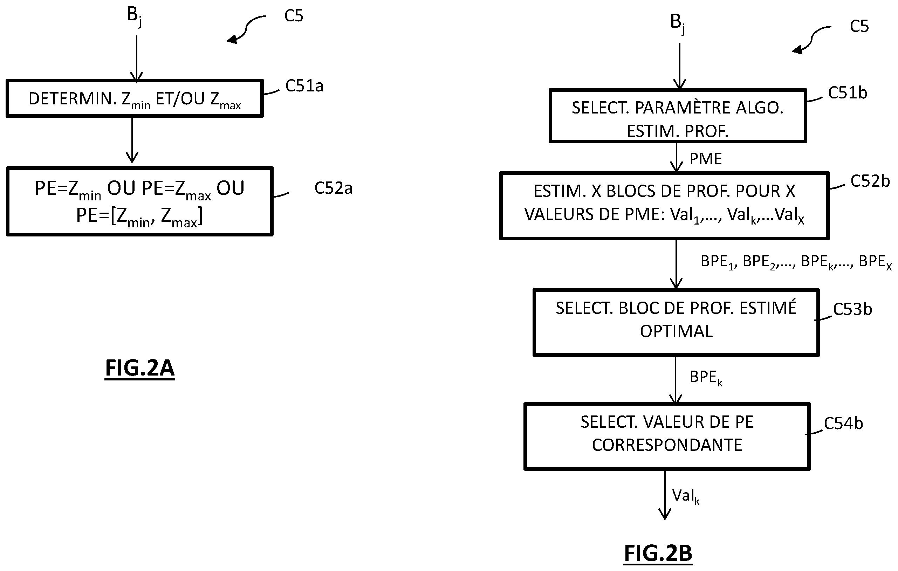

Selon un premier mode de réalisation d'obtention représenté en figure 2A, en C51a, il est déterminé quelle est la valeur de profondeur maximale Zₘₐₓ et/ou la valeur de profondeur minimale Zₘᵢₙ parmi les R valeurs de profondeur Z₁ à Z_{R}.

En C52a, est affecté au paramètre d'estimation de profondeur PE soit Zₘᵢₙ, soit Zₘₐₓ, soit l'intervalle [Zₘᵢₙ, Zₘₐₓ].

Selon un deuxième mode de réalisation d'obtention représenté en figure 2B, en C51b, au moins un paramètre d'estimation de profondeur PME d'une méthode d'estimation de profondeur est sélectionné. Il s'agit par exemple d'un paramètre de l'algorithme d'estimation de profondeur DERS mentionné plus haut. Selon un autre exemple, il pourrait s'agir d'un paramètre d'un autre algorithme d'estimation de profondeur, tel que par exemple l'algorithme IVDE. S'agissant de l'algorithme DERS, le paramètre sélectionné est par exemple le paramètre de régularisation Sc (« smoothing coefficient » en anglais) qui permet de forcer l'algorithme d'estimation de profondeur DERS à trouver un bloc de profondeur peu bruité qui correspond au bloc de pixels BT. D'autres exemples de paramètre d'algorithme d'estimation de profondeur pourraient être utilisés, tels que par exemple :
- un paramètre de fiabilité, tel que le paramètre λ de l'algorithme DERS qui permet à l'algorithme DERS de continuer à raffiner une valeur de profondeur si sa fiabilité est trop faible,
- un paramètre de lissage, tel que par exemple le paramètre de lissage initial β₀ utilisé dans l'algorithme IVDE et décrit dans le document précité « Dawid Mieloch, Adrian Dziembowski, Jakub Stankowski, Olgierd Stankiewicz, Marek Domański, Gwangsoon Lee, Yun Young Jeong [MPEG-I Visual] Immersive video depth estimation, ISO/IEC JTC1/SC29/WG11 MPEG2020 m53407 ».

En C52b, pour un ensemble fini de X (X≥1) valeurs possibles Val₁,...,Valₖ, ...,Val_{X} (1≤k≤X) du paramètre d'estimation de profondeur PME d'une méthode d'estimation de profondeur qui a été sélectionné, sont obtenus respectivement X blocs de profondeur estimés BPE₁,..., BPEₖ,..., BPE_{X}. Pour le paramètre Sc, l'ensemble fini de valeurs possibles est par exemple {0.01, 0.02, 0.04, 0.08, 0.16}. Bien entendu, d'autres valeurs sont possibles selon le contexte vidéo courant.

En C53b, est sélectionné parmi les X blocs BPE₁,..., BPEₖ,..., BPE_{X} dont la profondeur a été estimée, le bloc dont la profondeur estimée est la plus proche du bloc de profondeur original BPⱼ obtenu à partir du bloc de pixels BT. Une telle sélection est mise en œuvre à l'aide d'une mesure de distorsion, telle que par exemple le PSNR (pour « Peak Signal to Noise Ratio » en anglais), l'erreur quadratique moyenne, la somme des valeurs absolues des différences ou toute autre mesure similaire. Dans l'exemple représenté, c'est par exemple le bloc de profondeur estimé BPEₖ qui est sélectionné.

En C54b, la valeur Valₖ du paramètre d'estimation de profondeur PME d'une méthode d'estimation de profondeur qui a été sélectionné pour le bloc de profondeur estimé BPEₖ sélectionné en C53b est alors sélectionnée en tant que valeur du paramètre d'estimation de profondeur PE.

En référence à nouveau à la figure 1, en C6, le paramètre d'estimation de profondeur PE est codé, par exemple à l'aide d'une méthode de codage sans perte, telle que par exemple CABAC (pour « Context-adaptive binary arithmetic coding » en anglais), ou encore par codage de Huffman, ou par codage Lempel-Ziv. Dans l'exemple de la figure 2A, ce sont les valeurs Zₘᵢₙ ou Zₘₐₓ, ou encore l'intervalle [Zₘᵢₙ, Zₘₐₓ] qui sont codés en C6. Dans l'exemple de la figure 2B, c'est la valeur Valₖ du paramètre de régularisation Sc qui est codée en C6 ou encore du paramètre de fiabilité ou de lissage précité, dans d'autres modes de réalisation. En plus de cette valeur Valₖ, peut être codée une valeur d'un autre paramètre, tel que par exemple le paramètre de fiabilité ou de lissage précité, qui a pu être obtenue à l'issue de l'étape C54b. A l'issue de l'étape C6, un paramètre d'estimation de profondeur codé PE^{C} est obtenu.

De manière optionnelle, et pour cette raison représenté en pointillé sur la figure 1, une information IMEP représentative de la méthode d'estimation de profondeur utilisée en C5, par exemple DERS ou IVDE, est codée en C7, par exemple à l'aide d'une méthode de codage sans perte, telle que par exemple CABAC. Une telle information IMEP peut être codée au niveau de la vue Vᵢ ou de la séquence de vues Vᵢ situées à différents instants. A l'issue de l'étape C7, une information codée IMEP^{C} est obtenue.

En C8, la composante de texture Tᵢ est codée à l'aide d'un codeur vidéo classique, tel que par exemple HEVC. A l'issue de l'étape C8, une composante de texture codée Tᵢ^{C} est obtenue.

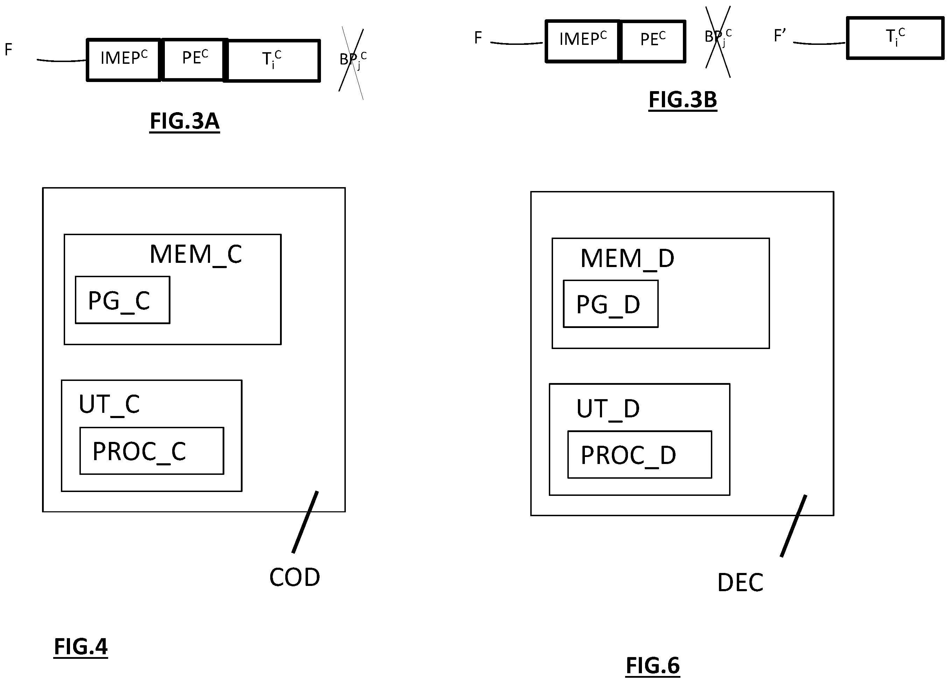

Selon un premier mode de réalisation représenté à la figure 3A, le paramètre d'estimation de profondeur codé PE^{C}, l'information codée IMEP^{C}, et les données de la composante de texture codée Tᵢ^{C} sont inscrits dans un même signal de données F destiné à être transmis à un décodeur qui sera décrit ultérieurement dans la description.

Selon un deuxième mode de réalisation représenté à la figure 3B, le paramètre d'estimation de profondeur codé PE^{C} et l'information codée IMEP^{C} sont inscrits dans un même signal de données F, tandis que les données de la composante de texture codée Tᵢ^{C} sont inscrites dans un autre signal de données F', les signaux F et F' étant destinés à être transmis au décodeur précité.

De manière avantageuse, conformément à l'invention, le procédé de codage ne génère pas un bloc de profondeur codé BPⱼ^{C}. Par conséquent, dans l'exemple des figures 3A et 3B, le signal F ne contient pas de bloc de profondeur codé BPⱼ^{C}.

Le procédé de codage qui vient d'être décrit ci-dessus peut ensuite être mis en œuvre pour chaque bloc B₁ à B_{M} de la composante de profondeur Pᵢ et ensuite pour chacune des vues V₁ à V_{N}.

### Exemple de mise en œuvre de dispositif de codage vidéo

La figure 4 présente la structure simplifiée d'un dispositif de codage COD adapté pour mettre en œuvre le procédé de codage selon l'un quelconque des modes particuliers de réalisation de l'invention.

Selon un mode particulier de réalisation de l'invention, les actions exécutées par le procédé de codage sont mises en œuvre par des instructions de programme d'ordinateur. Pour cela, le dispositif de codage COD a l'architecture classique d'un ordinateur et comprend notamment une mémoire MEM_C, une unité de traitement UT_C, équipée par exemple d'un processeur PROC_C, et pilotée par le programme d'ordinateur PG_C stocké en mémoire MEM_C. Le programme d'ordinateur PG_C comprend des instructions pour mettre en œuvre les actions du procédé de codage tel que décrit ci-dessus, lorsque le programme est exécuté par le processeur PROC_C.

A l'initialisation, les instructions de code du programme d'ordinateur PG_C sont par exemple chargées dans une mémoire RAM (non représentée) avant d'être exécutées par le processeur PROC_C. Le processeur PROC_C de l'unité de traitement UT_C met notamment en œuvre les actions du procédé de codage décrit ci-dessus, selon les instructions du programme d'ordinateur PG_C.

### Exemples de mise en œuvre d'un procédé de décodage de vidéos multi-vues

On décrit ci-après un procédé de décodage de vidéos multi-vues qui peut utiliser tout type de décodeurs vidéo multi-vues, par exemple conformes au standard 3D-HEVC ou MV-HEVC, ou autre.

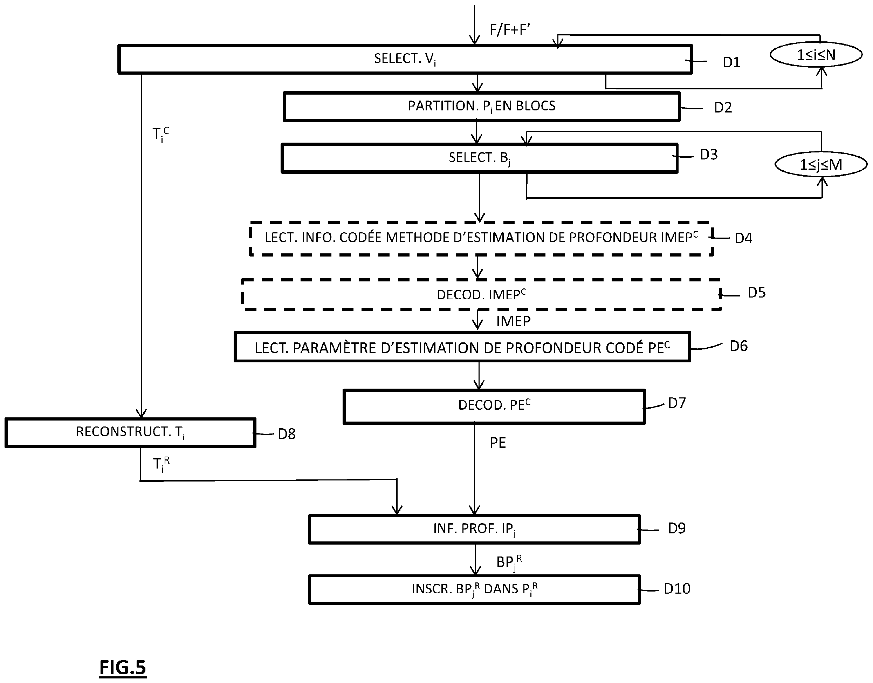

En référence à la figure 5, un tel procédé de décodage s'applique à un signal de données représentatif d'une vue courante qui a été codée selon le procédé de codage précité, ladite vue courante faisant partie d'une pluralité de vues V₁,..., V_{N}.

Le procédé de décodage selon l'invention consiste à décoder :
- un signal de données représentatif de la vue V₁ qui a été codée,
- un signal de données représentatif de la vue V₂ qui a été codée,
- ...,
- un signal de données représentatif de la vue Vᵢ qui a été codée,
- ...,
- un signal de données représentatif la vue V_{N} qui a été codée.

Le procédé de décodage comprend ce qui suit, pour un signal de données F (figure 3A) ou pour les signaux de données F et F' (figure 3B) représentatifs d'une vue courante Vᵢ codée à reconstruire :
En D1, une vue courante Vᵢ qui a été codée est sélectionnée à l'instant courant, chacune des N vues étant sélectionnées l'une après l'autre dans un ordre prédéterminé.

En D2, la composante de profondeur Pᵢ à reconstruire de ladite au moins une vue Vᵢ est partitionnée en une pluralité de blocs B₁, B₂,..., Bⱼ,..., B_{M} (1≤j≤M). Dans un mode de réalisation possible, on considère qu'un seul bloc de profondeur correspond à une composante de profondeur Pᵢ non partitionnée. Les blocs de profondeur peuvent être de taille prédéfinie (par exemple 64x64 pixels), paramétrable (et alors la taille utilisée transmise sous forme codée est décodée), ou encore adaptative, avec une signalisation des tailles utilisées similaire à celle mise en œuvre dans le standard HEVC et lues dans le signal F. Dans ce dernier cas, la composante de profondeur Pᵢ est d'abord divisée en blocs de taille maximale (par exemple 64x64 pixels), puis une information binaire est lue pour chaque bloc, par exemple dans le signal F ou un autre signal, indiquant si le bloc doit être subdivisé en blocs plus petits, de façon récursive, jusqu'à atteindre la taille minimale de bloc prédéfinie (par exemple 4x4 pixels), pour laquelle aucune information n'est lue. Ceci permet de définir la découpe en blocs de la composante de profondeur Pᵢ.

En D3, un bloc courant Bⱼ de la composante de profondeur Pᵢ est sélectionné, chacun des blocs de la composante de profondeur Pᵢ étant sélectionné l'un après l'autre dans un ordre prédéterminé.

En D4, de manière optionnelle, et pour cette raison représenté en pointillé sur la figure 5, il est procédé à la lecture dans le signal de données F (figures 3A ou 3B) de l'information codée IMEP^{C} représentative de la méthode d'estimation de profondeur qui a été utilisée en C5 (figure 1).

En D5, l'information codée IMEP^{C} est décodée, par exemple à l'aide d'une méthode de décodage sans perte, telle que par exemple CABAC, ou encore par décodage de Huffman ou par décodage Lempel-Ziv. Une telle information codée IMEP^{C} peut être décodée au niveau de la vue courante Vᵢ ou au niveau de la séquence de vues Vᵢ situées à différents instants. A l'issue de l'étape D5, une information IMEP est obtenue. Alternativement aux étapes optionnelles D4 et D5, la méthode d'estimation de profondeur qui a été utilisée en C5 pourrait être prédéfinie au décodeur. Auquel cas, l'information IMEP représentative de la méthode d'estimation de profondeur est directement disponible.

En D6, il est procédé à la lecture, dans le signal de données F de la figure 3A ou de la figure 3B, d'au moins un paramètre d'estimation de profondeur codé PE^{C} associé au bloc courant Bⱼ à reconstruire de la composante de profondeur Pᵢ.

En D7, ledit au moins un paramètre d'estimation de profondeur codé PE^{C} est décodé, par exemple à l'aide d'une méthode de décodage sans perte, telle que par exemple CABAC, ou encore par décodage de Huffman ou par décodage Lempel-Ziv. Si ce sont les valeurs de profondeur Zₘᵢₙ ou Zₘₐₓ, ou encore l'intervalle [Zₘᵢₙ, Zₘₐₓ] qui ont été codés en C6 :
- soit la valeur de profondeur Zₘᵢₙ est décodée en D7 et est attribuée au paramètre d'estimation de profondeur PE,
- soit la valeur de profondeur Zₘₐₓ est décodée en D7 et est attribuée au paramètre d'estimation de profondeur PE,
- soit l'intervalle de valeurs de profondeur [Zₘᵢₙ, Zₘₐₓ] est décodé en D7 et est attribué au paramètre d'estimation de profondeur PE.

Si c'est la valeur Valₖ du paramètre de régularisation Sc qui a été codée en C6, et/ou encore du paramètre de fiabilité ou de lissage précité selon d'autres modes de réalisation, c'est cette valeur Valₖ qui est décodée en D7 et qui est attribuée au paramètre d'estimation de profondeur PE. En plus de cette valeur Valₖ, peut être décodée une valeur d'un autre paramètre, tel que par exemple le paramètre de fiabilité ou de lissage précité, qui a été obtenue à l'issue de l'étape C54b.

En D8, la composante de texture Tᵢ de ladite au moins une vue Vᵢ est reconstruite, par exemple au moyen d'un décodeur vidéo classique, tel que par exemple HEVC. Une composante de texture reconstruite Tᵢ^{R} est obtenue à l'issue de l'étape D8. Bien entendu, l'étape D8 peut être mise en œuvre avant les étapes D1 à D7 ou à n'importe quel instant, à réception du signal de données F (figure 3A) ou F' (figure 3B). A cet effet, les données de la composante de texture codée Tᵢ^{C} sont lues dans le signal F (figure 3A) ou F' (figure 3B), puis reconstruites, générant la composante de texture reconstruite Tᵢ^{R.}

En D9, une information de profondeur IPⱼ dudit bloc courant Bⱼ est obtenue à partir dudit au moins un paramètre d'estimation de profondeur PE qui a été décodé en D7 et de données de texture (pixels) de ladite composante de texture reconstruite Tᵢ^{R} ou d'une composante de texture reconstruite d'une autre vue parmi N que la vue Vᵢ.

Selon un premier mode de réalisation de l'étape D9, en utilisant la méthode d'estimation de profondeur prédéfinie ou correspondant au paramètre IMEP obtenu en D5, est mise en œuvre une recherche de la profondeur pour chaque pixel d'un bloc de la composante de texture reconstruite Tᵢ^{R} à l'aide de la valeur de profondeur Zₘᵢₙ, ou de la valeur de profondeur Zₘₐₓ ou encore de l'intervalle de valeurs de profondeur [Zₘᵢₙ, Zₘₐₓ] relativement au bloc courant Bⱼ de la composante de profondeur Pᵢ à reconstruire. L'avantage d'une telle opération est de déterminer la profondeur du bloc courant Bⱼ, non pas entre la profondeur maximale et la profondeur minimum théoriquement possibles (généralement, entre 0 mètre et l'infini), mais entre au plus [Zₘᵢₙ, Zₘₐₓ]. Ceci permet de réduire fortement le nombre de profondeurs à tester et ainsi de réduire la complexité de l'algorithme d'estimation de profondeur. A l'issue du premier mode de réalisation de l'étape D9, est obtenu un bloc de profondeur reconstruit BPⱼ^{R} correspondant au bloc courant Bⱼ.

Selon un deuxième mode de réalisation de l'étape D9, la méthode d'estimation de profondeur prédéfinie ou correspondant au paramètre IMEP obtenu en D5 est appliquée bloc courant Bⱼ en utilisant la valeur Valₖ du paramètre de régularisation Sc (ou du paramètre de fiabilité ou de lissage par exemple) qui a été décodée en D7 pour faire la recherche de la profondeur pour chaque pixel d'un bloc de la composante de texture reconstruite Tᵢ^{R}. A l'issue du deuxième mode de réalisation de l'étape D9, est obtenu un bloc de profondeur reconstruit BPⱼ^{R} correspondant au bloc courant Bⱼ. Grâce à ce deuxième mode de réalisation, le bloc de profondeur reconstruit BPⱼ^{R} est aussi proche du bloc de profondeur BPⱼ qui a été obtenu en C4 au cours du procédé de codage de la figure 1, le bloc de profondeur BPⱼ n'ayant été avantageusement selon l'invention, ni codé, ni transmis dans le signal F ou F'.

En D10, le bloc de profondeur reconstruit BPⱼ^{R} est alors inscrit dans une composante de profondeur en train d'être reconstruite Pᵢ^{R} correspondant à la composante de texture reconstruite Tᵢ^{R}.

Le procédé de décodage qui vient d'être décrit ci-dessus peut ensuite être mis en œuvre pour chaque bloc de pixels B₁ à B_{M} à reconstruire et ensuite pour chacune des vues V₁ à V_{N} à reconstruire.

### Exemple de mise en œuvre de dispositif de décodage vidéo

La figure 6 présente la structure simplifiée d'un dispositif de décodage DEC adapté pour mettre en œuvre le procédé de décodage selon l'un quelconque des modes particuliers de réalisation de l'invention.

Selon un mode particulier de réalisation de l'invention, les actions exécutées par le procédé de décodage précité sont mises en œuvre par des instructions de programme d'ordinateur. Pour cela, le dispositif de décodage DEC a l'architecture classique d'un ordinateur et comprend notamment une mémoire MEM_D, une unité de traitement UT_D, équipée par exemple d'un processeur PROC_D, et pilotée par le programme d'ordinateur PG_D stocké en mémoire MEM_D. Le programme d'ordinateur PG_D comprend des instructions pour mettre en œuvre les actions du procédé de décodage tel que décrit ci-dessus, lorsque le programme est exécuté par le processeur PROC_D.

A l'initialisation, les instructions de code du programme d'ordinateur PG_D sont par exemple chargées dans une mémoire RAM (non représentée) avant d'être exécutées par le processeur PROC_D. Le processeur PROC_D de l'unité de traitement UT_D met notamment en œuvre les actions du procédé de décodage décrit ci-dessus, selon les instructions du programme d'ordinateur PG_D.

### Exemples de mise en œuvre d'un procédé de synthèse de vues

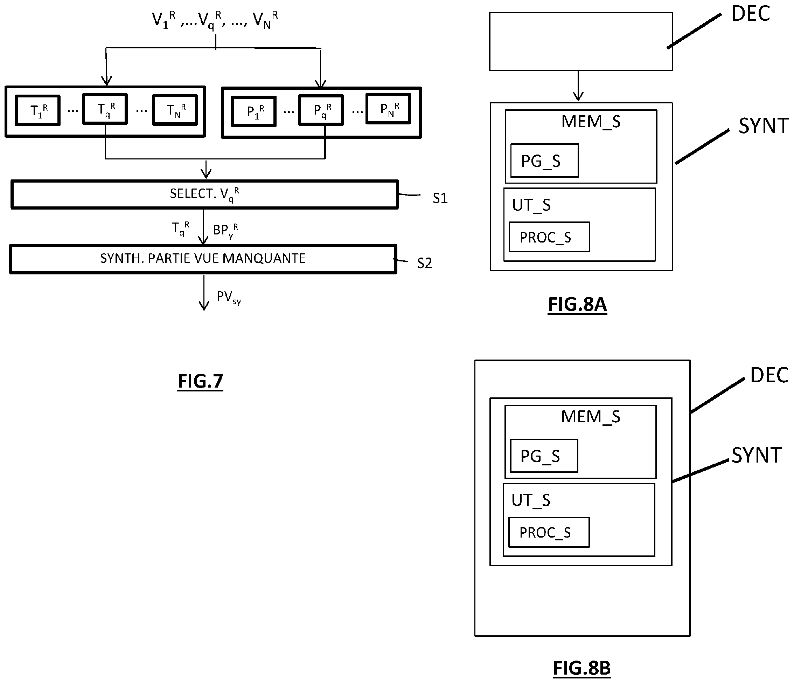

On décrit maintenant, en référence à la figure 7, un procédé de synthèse de vue qui utilise une vue reconstruite selon le procédé de décodage de la figure 5.

Comme illustré sur la figure 7, le procédé de synthèse selon l'invention utilise au moins une vue reconstruite parmi N vues reconstruites V₁^{R},..., V_{N}^{R} obtenues à l'issue du procédé de décodage de la figure 5.

En S1, au moins une vue reconstruite V_{q}^{R} (1≤q≤N) est sélectionnée parmi les N vues reconstruites. Une vue reconstruite V_{q}^{R} comprend une composante de texture reconstruite T_{q}^{R} et sa composante de profondeur reconstruite associée P_{q}^{R}.

En S2, au moins une partie synthétisée PV_{sy} d'une vue manquante ou intermédiaire, telle qu'une vue requise par un utilisateur pour être affichée sur l'écran de son ordinateur ou de son téléphone par exemple, est calculée à partir de la composante de texture reconstruite T_{q}^{R} et d'au moins un bloc de profondeur reconstruit BP_{y}^{R} associé à un bloc de pixels reconstruit B_{y}^{R} de cette composante de texture reconstruite T_{q}^{R}, avec 1≤y≤M. La partie synthétisée PV_{sy} de la vue manquante ou intermédiaire est calculée à l'aide d'un algorithme de synthèse classique, tel que par exemple l'algorithme VSRS, l'algorithme RVS (« Reference View Synthesizer » en anglais), l'algorithme VVS (« Versatile View Synthesizer » en anglais), etc.

### Exemples de mise en œuvre de dispositif de synthèse

La figure 8A ou 8B présente la structure simplifiée d'un dispositif de synthèse SYNT adapté pour mettre en œuvre le procédé de synthèse de la figure 7 selon l'un quelconque des modes particuliers de réalisation de l'invention.

Selon un mode particulier de réalisation de l'invention, les actions exécutées par le procédé de synthèse de la figure 7 sont mises en œuvre par des instructions de programme d'ordinateur. Pour cela, le dispositif de synthèse SYNT a l'architecture classique d'un ordinateur et comprend notamment une mémoire MEM_S, une unité de traitement UT_S, équipée par exemple d'un processeur PROC_S, et pilotée par le programme d'ordinateur PG_S stocké en mémoire MEM_S. Le programme d'ordinateur PG_S comprend des instructions pour mettre en œuvre les actions du procédé de synthèse tel que décrit ci-dessus, lorsque le programme est exécuté par le processeur PROC_S.

A l'initialisation, les instructions de code du programme d'ordinateur PG_S sont par exemple chargées dans une mémoire RAM (non représentée) avant d'être exécutées par le processeur PROC_S. Le processeur PROC_S de l'unité de traitement UT_S met notamment en œuvre les actions du procédé de synthèse décrit ci-dessus, selon les instructions du programme d'ordinateur PG_S.

Selon le mode de réalisation représenté sur la figure 8A, le dispositif de synthèse SYNT est agencé en sortie du décodeur DEC, comme illustré sur la figure 8A. Selon le mode de réalisation représenté sur la figure 8B, le dispositif de synthèse SYNT fait partie intégrante du décodeur DEC, comme illustré sur la figure 8B.

Selon différents modes de réalisation, l'invention concerne :
- un procédé de codage de vues représentant simultanément une scène 3D selon différentes positions ou différents angles de vue, mis en œuvre par un dispositif de codage, comprenant ce qui suit, pour une composante de profondeur d'au moins une vue :
   - partitionner (C2) ladite composante de profondeur en au moins un bloc,
   - obtenir (C4) une information de profondeur dudit au moins un bloc à partir de données de texture d'une composante de texture d'au moins une desdites vues,
   - obtenir (C5) au moins un paramètre d'estimation de profondeur à partir de ladite information,
   - coder (C6) ledit au moins un paramètre d'estimation de profondeur, l'information de profondeur dudit au moins un bloc n'étant pas codée ;
- le procédé de codage dans lequel ledit au moins un paramètre d'estimation de profondeur est soit une valeur de profondeur (Zₘₐₓ) dudit au moins un bloc qui est supérieure à chacune des valeurs de profondeur dudit au moins un bloc, soit une valeur de profondeur (Zₘᵢₙ) dudit au moins un bloc qui est inférieure à chacune des valeurs de profondeur dudit au moins un bloc ;
- le procédé de codage dans lequel ledit au moins un paramètre d'estimation de profondeur est un paramètre (Sc ;λ ;β₀) utilisé par une méthode d'estimation de profondeur ;
- le procédé de codage, dans lequel est codée une information représentative d'une méthode d'estimation de profondeur ;
- un dispositif de codage correspondant ;
- un procédé de décodage de vues représentant simultanément une scène 3D selon différentes positions ou différents angles de vue, mis en œuvre par un dispositif de décodage, comprenant ce qui suit, pour une composante de profondeur d'au moins une vue, ladite composante de profondeur étant partitionnée en au moins un bloc :
   - lire (D6) dans un signal de données au moins un paramètre d'estimation de profondeur associé audit au moins un bloc,
   - décoder (D7) ledit au moins un paramètre d'estimation de profondeur,
   - obtenir (D9) une information de profondeur dudit au moins un bloc à partir dudit au moins un paramètre d'estimation de profondeur et à partir de données de texture d'une composante de texture reconstruite d'au moins une desdites vues.
- le procédé de décodage dans lequel ledit au moins un paramètre d'estimation de profondeur est soit une valeur de profondeur (Zₘₐₓ) dudit au moins un bloc qui est supérieure à chacune des valeurs de profondeur dudit au moins un bloc, soit une valeur de profondeur (Zₘᵢₙ) dudit au moins un bloc qui est inférieure à chacune des valeurs de profondeur dudit au moins un bloc ;
- le procédé de décodage dans lequel ledit au moins un paramètre d'estimation de profondeur est un paramètre (Sc) utilisé par une méthode d'estimation de profondeur ;
- le procédé de décodage dans lequel est décodée une information représentative d'une méthode d'estimation de profondeur ;
- un dispositif de décodage correspondant ;
- un procédé de synthèse de vue mis en œuvre par un dispositif de décodage ou de synthèse de vue, comprenant ce qui suit :
   - reconstruire une vue conformément au procédé de décodage,
   - synthétiser au moins une partie d'une vue à partir de la vue reconstruite et de l'information représentative de la profondeur dudit au moins un bloc qui a été obtenue.

## Revendications

1. Procédé de décodage d'une composante de profondeur d'au moins une vue, comprenant :
- la lecture, dans un signal de données, d'une information indiquant si un bloc courant de la composante de profondeur est subdivisé en blocs de plus petite taille,
- pour au moins un bloc d'une partition en blocs obtenue à partir de ladite information, le décodage d'un paramètre d'estimation de profondeur associé audit bloc.

2. Procédé selon la revendication 1, dans lequel :
- si le bloc courant de la composante de profondeur n'est pas subdivisé, le paramètre d'estimation de profondeur est associé au bloc courant,
- sinon, le paramètre d'estimation de profondeur est associé à un bloc de plus petite taille issu de la subdivision.

3. Procédé selon la revendication 1, dans lequel ladite partition est obtenue par :
- division initiale de ladite composante de profondeur en blocs de taille prédéterminée,
- au moins une itération des étapes suivantes :
- pour au moins un bloc courant, lecture d'une information binaire indiquant si le bloc courant est subdivisé en blocs plus petits,
- si oui, division du bloc courant en blocs plus petits,
le bloc courant étant le bloc de taille prédéterminé pour la première itération, un bloc plus petit pour les itérations suivantes.

4. Procédé selon la revendication 1, comprenant obtenir une information de profondeur dudit bloc courant à partir du ou des paramètres d'estimation de profondeur décodés et de données de texture d'une composante de texture reconstruite d'au moins une vue.

5. Procédé selon la revendication 1, dans lequel ledit paramètre d'estimation de profondeur est :
- une valeur minimale de profondeur,
- une valeur maximale de profondeur, ou
- un intervalle de valeurs de profondeur.

6. Procédé selon la revendication 5, dans lequel l'intervalle de valeurs de profondeur est défini par une valeur minimale de profondeur et une valeur maximale de profondeur parmi les valeurs de profondeur du bloc.

7. Procédé selon la revendication 1, dans lequel ledit paramètre d'estimation de profondeur est un paramètre utilisé par une méthode d'estimation de profondeur.

8. Procédé selon la revendication 1, comprenant le décodage d'une information représentative d'une méthode d'estimation de profondeur.

9. Procédé de codage d'une composante de profondeur d'au moins une vue, comprenant :
- la partition en blocs de ladite composante de profondeur, comprenant l'insertion dans un signal de données d'une information indiquant si un bloc courant a été subdivisé en blocs de plus petite taille,
- pour au moins un bloc issu de la partition, le codage d'un paramètre d'estimation de profondeur associé audit bloc.

10. Dispositif de décodage d'une composante de profondeur d'au moins une vue, comprenant un processeur configuré pour :
- lire, dans un signal de données, une information indiquant si un bloc courant de la composante de profondeur est subdivisé en blocs de plus petite taille,
- pour au moins un bloc d'une partition en blocs obtenue à partir de ladite information, décoder un paramètre d'estimation de profondeur associé audit bloc.

11. Dispositif de codage d'une composante de profondeur d'au moins une vue, comprenant un processeur configuré pour :
- partitionner en blocs ladite composante de profondeur, comprenant insérer dans un signal de données une information indiquant si un bloc courant a été subdivisé en blocs de plus petite taille,
- pour au moins un bloc issu de la partition, coder un paramètre d'estimation de profondeur associé audit bloc.

12. Programme d'ordinateur comportant des instructions de code de programme pour la mise en œuvre d'un procédé selon l'une quelconque des revendications 1 à 9, lorsqu'il est exécuté sur un ordinateur.

13. Support d'informations lisible par un ordinateur, et comportant des instructions d'un programme d'ordinateur selon la revendication 12.
